# EUROPEAN PATENT APPLICATION

(11) **EP 3 517 340 A1**
(43) Date of publication of application: **31.07.2019**
(21) Application number: 19153844.6
(22) Date of filing: 25.01.2019
(51) Int. Cl.: B60L 1/00, B60L 58/18, B60L 58/14, B60L 58/20

(54) **ELECTRICITY SUPPLY SYSTEM OF DRIVEN ELEMENT OF VEHICLE**

(30) Priority: 30.01.2018 TW 10703290; 12.11.2018 EP 18205576
(71) Applicant: Kwang Yang Motor Co., Ltd., Kaohsiung City 807 (TW)
(72) Inventor: TENG, HSIN LIANG, 807 KAOHSIUNG CITY (TW); CHENG, JEN CHIEH, 807 KAOSHIUNG CITY (TW)
(74) Representative: Lang, Christian

(57) **Abstract**

An electricity supply system of a driven element of a vehicle includes: a drive unit, where the drive unit drives a driven element to move; a controller, used to control the drive unit; a plurality of electricity storages, where at least one of the plurality of electricity storages supplies electricity to the drive unit, to drive the driven element to move; and the plurality of electricity storages includes a low-power electricity storage, a regular electricity storage, and a removable electricity storage;, and a pluggable charging unit, where the pluggable charging unit charges the removable electricity storage, the regular electricity storage, and the low-power electricity storage.

## Description

### BACKGROUND

### Technical Field

The present invention relates to an electricity supply system, and more specifically, to an electricity supply system of a driven element of a vehicle.

### Related Art

At present, a safety cover of a removable battery of an electric vehicle in the market is generally opened by rotating a mechanical rope by using a key, or a battery cover may be opened by pulling a mechanical rope by using an electromagnetic valve. However, when a cover is opened by pulling a mechanical rope of an electromagnetic valve, a power source is needed to drive a battery valve, and when a removable battery in a vehicle is pulled out, there is no electricity to start the battery valve to pull the rope. Therefore, in some solutions, a non-power low-voltage battery is placed in the vehicle, and when the removable battery is pulled out, the low-voltage battery can still be used to open an electric cover, and a power battery is then used to charge the non-power low-voltage battery when the entire vehicle is mounted, to keep the low-voltage battery in a high electricity state.

However, when the low-voltage battery supplies electricity to peripheral standby devices, there is a current consumption problem, and if the mounting time of the power battery on the vehicle is short or the low-voltage battery has a small capacity, the time for the charging the low-voltage battery and the electric quantity are also decreased. Finally, the low-voltage battery may exhaust the electricity, or a service life problem of the low-voltage battery may be caused, or the peripheral devices may exhaust the electricity, or a problem of producing no electricity for protection may be started. Therefore, no electricity of the low-voltage battery in the entire vehicle can open the electric cover. As a result, the entire vehicle cannot be started, and an external tool is needed to remove a shell by force to take out the battery to charge to return to normal.

An electricity supply system provided to a driven element and disclosed in the background art is as a portable electricity storage device disclosed in the Taiwan Certificate NO. 1517078. The portable electricity storage device includes a removable battery installed in an electric vehicle, where the removable battery only supplies electricity to a driven element by using a single electricity source, and does not provide multiple electricity sources to drive the driven element.

In conclusion, multiple electricity sources still need to be provided, to supply electricity required by the driven element, to prevent the driven element from being deadlocked due to lack of electricity in the battery, and avoid the problem that an external tool is needed for removing. Therefore, the intentions of consumers for purchasing electric vehicles are reduced.

### SUMMARY

### An issue to be resolved by the present invention

Therefore, the objective of the present invention is to provide an electricity supply system of a driven element of a vehicle, and provide multiple electricity sources to a drive unit, to prevent a driven element from being deadlocked, and avoid the problem that a mechanical tool is needed for removing.

### Technical means to resolve the problem

To resolve the foregoing problem, an electricity supply system of a driven element of a vehicle according to claim 1 of the present invention comprises: a drive unit, wherein the drive unit drives the driven element to move; a controller, used to control the drive unit; and a plurality of electricity storages, wherein at least one of the plurality of electricity storages supplies electricity to the drive unit, to drive the driven element to move.

An electricity supply system of a driven element of a vehicle according to claim 12 of the present invention comprises: a drive unit, wherein the drive unit drives a driven element to move; a controller, used to control the drive unit; a low-power electricity storage, used to supply electricity required by the drive unit; and a regular electricity storage, wherein the regular electricity storage is used to supply electricity required by the drive unit; in the low-power electricity storage, the controller receives identification information by using a wireless reading unit, and allows, based on the identification information, the low-power electricity storage to supply electricity required by the drive unit, to drive the driven element to move; and the driven element is applicable to an electricity storage of the electric vehicle.

### Effects of the present invention

The effect of claims 1 and 12 of the present invention is that the situation in which there is no electricity is avoided, to ensure normal movement for opening the driven element, and the electricity storage may be changed, to ensure that the vehicle has sufficient electricity.

The effect of claim 2 of the present invention is that the driven element can be controlled to move, and the electricity storage can be changed, to improve the convenience of changing the electricity storage.

The effect of claim 3 of the present invention is that the driven element is electrically opened or accommodated by means of identifying a near field communication signal, to improve the scientific and technological sense of the vehicle.

The effect of claims 4 to 8 of the present invention is that a regular electricity storage has a higher capacity of electricity than a low-power electricity storage, and the regular electricity storage supplies electricity required by the drive unit, and provides another electricity source for supplying electricity to the low-power electricity storage, to drive the driven element to move.

The effect of claim 9 of the present invention is that for the removable electricity storage, the electricity storage can be removed and changed conveniently, to charge the regular electricity storage, so that the regular electricity storage always keeps a full electricity state.

The effect of claim 10 of the present invention is that the removable electricity storage or the regular electricity storage is used to charge the low-power electricity storage, so that the low-power electricity storage always keeps a full electricity state.

The effect of claim 11 of the present invention is that when none of the removable/regular/low-power electricity storages have electricity, a pluggable charging unit may be used to directly supply electricity or charge, so that no external tool needs to be used to remove the driven element when none of the electricity storages have electricity.

The effect of claims 13 to 17 of the present invention is that the driven element can be controlled to move, and the electricity storage can be changed, to improve the convenience of changing the electricity storage.

### BRIEF DESCRIPTION OF THE DRAWINGS

FIG. 1a is a schematic block diagram of a circuit according to a first embodiment of the present invention;
FIG. 1b is a schematic block diagram of a circuit according to a second embodiment of the present invention;
FIG. 2a is a schematic diagram of a lock position according to an embodiment of the present invention;
FIG. 2b is a schematic diagram of a lock movement according to an embodiment of the present invention;
FIG. 2c is a schematic diagram of a lock mark according to an embodiment of the present invention;
FIG. 3 is a schematic diagram of a vehicle according to an embodiment of the present invention;
FIG. 4a is a schematic diagram of a foot pedal of a vehicle according to an embodiment of the present invention;
FIG. 4b is a schematic diagram of a removable electricity storage of a vehicle according to an embodiment of the present invention; and
FIG. 4c is a schematic diagram of a cover body of an electricity storage box according to an embodiment of the present invention.

### DETAILED DESCRIPTION

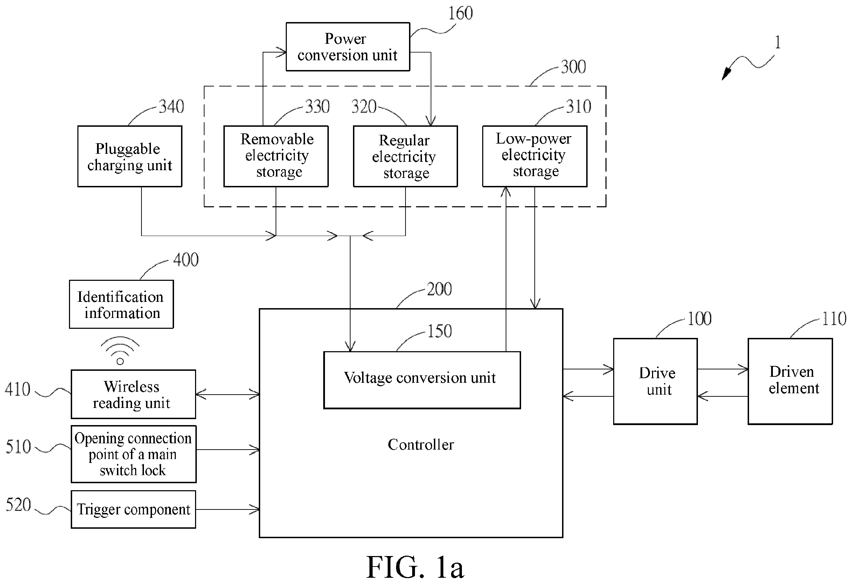

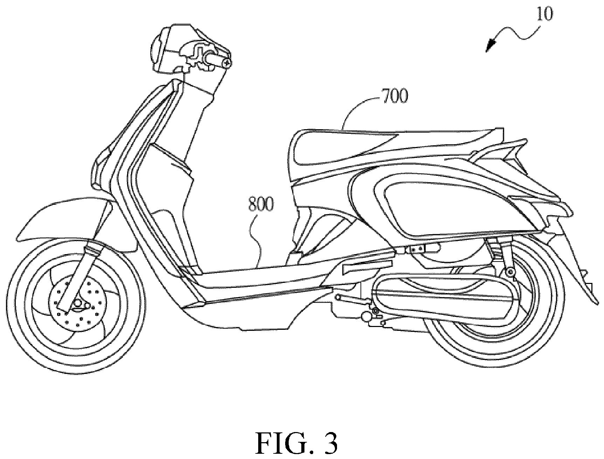

Referring to FIG. 1a and FIG. 3, an electricity supply system 1 of a driven element of an electric vehicle includes: a drive unit 100, where the drive unit 100 drives a driven element 110 to move; a controller 200, used to control the drive unit 100; a plurality of electricity storages 300, where at least one of the plurality of electricity storages 300 supplies electricity to the drive unit 100, to drive the driven element 110 to move; and the plurality of electricity storages 300 includes a low-power electricity storage 310 (for example, a lead-acid battery or a lithium battery), a regular electricity storage 320, and a removable electricity storage 330; and a pluggable charging unit 340, where the pluggable charging unit 340 charges the removable electricity storage 330, the regular electricity storage 320, and the low-power electricity storage 310. The electric vehicle includes at least vehicles driven by motor power, for example, an electric motor car, an electric bicycle, an electric car, an electric scooter, an electric ATV, an electric multi-purpose vehicle, and the like. In addition to being implemented on the electric vehicle, the present invention may alternatively be implemented on a non-electric vehicle. The driven element 110 is applicable to an electricity storage 300 of the electric vehicle.

Referring to FIG. 1a, FIG. 3, FIG. 4a, and FIG. 4b, the drive unit 100 drives the driven element 110 to move at an accommodating position or an opening position, to electrically open or accommodate the driven element 110, to improve the convenience of changing the electricity storage. The driven element 110 is an electricity storage box 600 in an electric vehicle 10, a cover body 610 of the electricity storage box, or a cushion 700 of the vehicle.

Referring to FIG. 1a, the plurality of electricity storages 300 includes at least one low-power electricity storage 310. The controller 200 receives identification information 400 (for example, a sequence number of the vehicle) by using a wireless reading unit 410 (for example, near field communication), and allows, based on the identification information 400, the low-power electricity storage 310 to supply electricity required by the drive unit 100, to electrically open or accommodate the driven element by identifying a near field communication signal, to improve the scientific and technological sense of the vehicle.

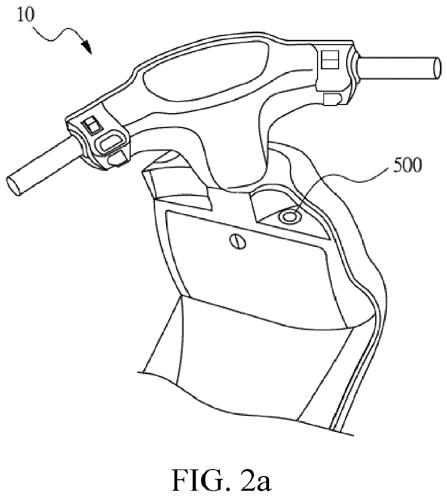

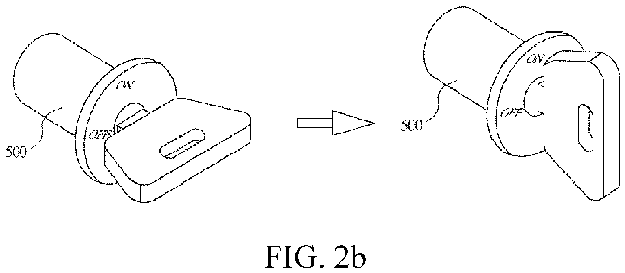

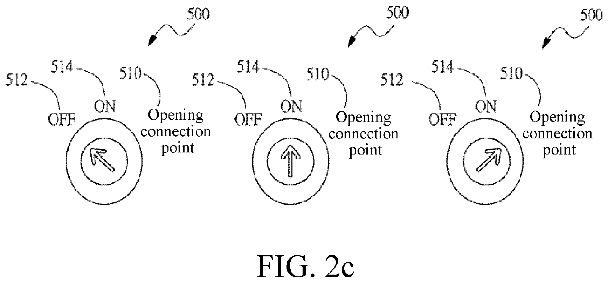

Referring to FIG. 1a, FIG. 2a, FIG. 2b, and FIG. 2c, the electric vehicle 10 has a main switch lock 500, the main switch lock 500 may rotate from a key off state 512 to a key on state 514, and then rotate to an opening connection point 510, and the controller 200 determines a trigger signal of the opening connection point 510.

Referring to FIG. 1a, FIG. 2a, FIG. 2b, and FIG. 2c, the plurality of electricity storages 300 further includes at least one regular electricity storage 320 and one low-power electricity storage 310. The controller 200 determines a trigger signal (not shown in the figures) of a main switch lock 500, and operates a trigger component 520 (for example, a button or a switch) of a electric vehicle 10 based on the trigger signal, to allow the regular electricity storage 320 to supply electricity required by the drive unit 100.

The plurality of electricity storages 300 further includes at least one regular electricity storage 320 and one low-power electricity storage 310. The controller 200 determines a trigger signal (not shown in the figures) of a main switch lock 500, and operates a trigger component 520 (for example, a button or a switch) of an electric vehicle 10 based on the trigger signal, to allow the low-power electricity storage 310 to supply electricity required by the drive unit 100

The plurality of electricity storages 300 further includes at least one regular electricity storage 320 and one low-power electricity storage 310. The controller 200 determines that a main switch lock 500 is in a key on state 514, and operates a trigger component 520 (for example, a button or a switch) of an electric vehicle 10, to allow the low-power electricity storage 310 to supply electricity required by the drive unit 100.

The plurality of electricity storages 300 further includes at least one regular electricity storage 320 and one low-power electricity storage 310. The controller 200 determines that a main switch lock 500 is operated to an opening connection point 510, to allow the regular electricity storage 320 to supply electricity required by the drive unit 100.

The plurality of electricity storages 300 further includes at least one regular electricity storage 320 and one low-power electricity storage 310. The controller 200 determines that a main switch lock 500 is operated to an opening connection point 510, to allow the low-power electricity storage 310 to supply electricity required by the drive unit 100.

Referring to FIG. 1a again, a voltage conversion unit 150 is further included. The regular electricity storage 320 supplies electricity to the drive unit 100 by using the voltage conversion unit 150, and the regular electricity storage 320 charges the low-power electricity storage 310 by using the voltage conversion unit 150.

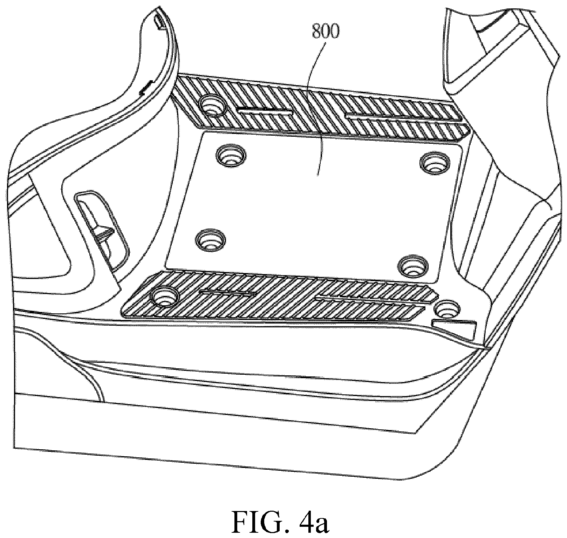

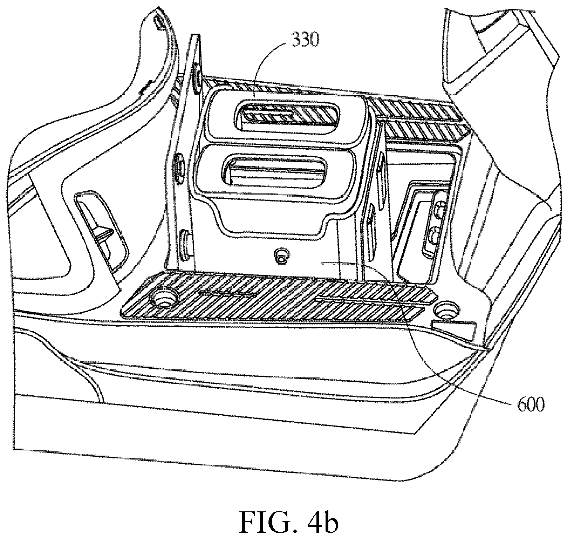

Referring to FIG. 1a, FIG. 4a, and FIG. 4b again, the plurality of electricity storages 300 includes at least one removable electricity storage 330, and the removable electricity storage 330 charges the regular electricity storage 320 by using a power conversion unit 160.

The plurality of electricity storages 300 includes at least one removable electricity storage 330, and the removable electricity storage 330 or the regular electricity storage 320 charges the low-power electricity storage 310 by using a voltage conversion unit 150.

Referring to FIG. 1a, the electricity storage 300 is a battery; the drive unit 100 is a motor or an electromagnetic valve; the controller 200 is a driven element drive controller; the power conversion unit 160 is a direct current charger; and the voltage conversion unit 150 is a charging device.

Referring to FIG. 1a and FIG. 4b, the plurality of electricity storages 300 further includes at least one removable electricity storage 330; the driven element 110 is an electricity storage box 600; the drive unit 100 is a motor; and the controller 200 is a driven element drive controller, the electricity storage box 600 accommodates the removable electricity storage 330, and the driven element drive controller controls the motor to move, so that the electricity storage box 600 rotates from an accommodating position to an opening position.

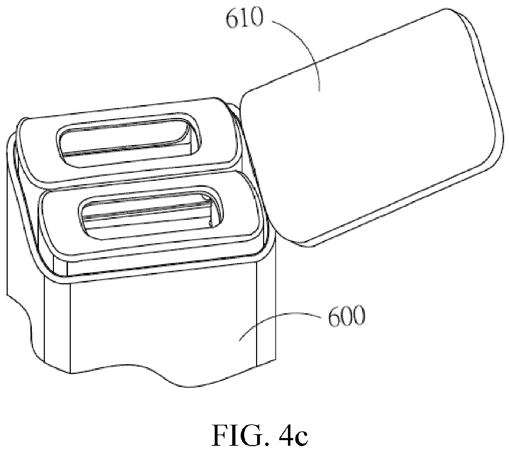

Referring to FIG. 1a and FIG. 4c, the plurality of electricity storages 300 further includes at least one removable electricity storage 330; the driven element 110 is a cover body 610 of the electricity storage box; the drive unit 100 is a motor; and the controller 200 is a driven element drive controller, the electricity storage box 600 accommodates the removable electricity storage 330, and the driven element drive controller controls the motor to move, so that the cover body 610 of the electricity storage box rotates from an accommodating position to an opening position.

Referring to FIG. 1a and FIG. 4c, the plurality of electricity storages 300 further includes at least one removable electricity storage 330; the driven element 110 is a cover body 610 of the electricity storage box; the drive unit 100 is an electromagnetic valve; and the controller 200 is a driven element drive controller, the electricity storage box 600 accommodates the removable electricity storage 330, and the driven element drive controller controls the electromagnetic valve to move to drive a lockset (not shown in the figures), to unlock the cover body 610 of the electricity storage box.

Referring to FIG. 1a and FIG. 3, the plurality of electricity storages 300 further includes at least one removable electricity storage 330; the driven element 110 is a cushion 700 of a vehicle; the drive unit 100 is a motor; and the controller 200 is a driven element drive controller, the removable electricity storage 330 is accommodated on a lower side of the cushion 700 of the vehicle, and the driven element drive controller controls the motor to move, so that the cushion 700 of the vehicle rotates from an accommodating position to an opening position.

Referring to FIG. 1a and FIG. 3, the plurality of electricity storages 300 further includes at least one removable electricity storage 330; the driven element 110 is a cushion 700 of a vehicle; the drive unit 100 is an electromagnetic valve; and the controller 200 is a driven element drive controller, the removable electricity storage 330 is accommodated on a lower side of the cushion 700 of the vehicle, and the driven element drive controller controls the electromagnetic valve to move to drive a lockset, to unlock the cushion 700 of the vehicle.

Referring to FIG. 4a and FIG. 4b, the electricity storage box 600 is disposed on a lower side of a foot pedal 800, and the foot pedal 800 is connected to the electricity storage box 600.

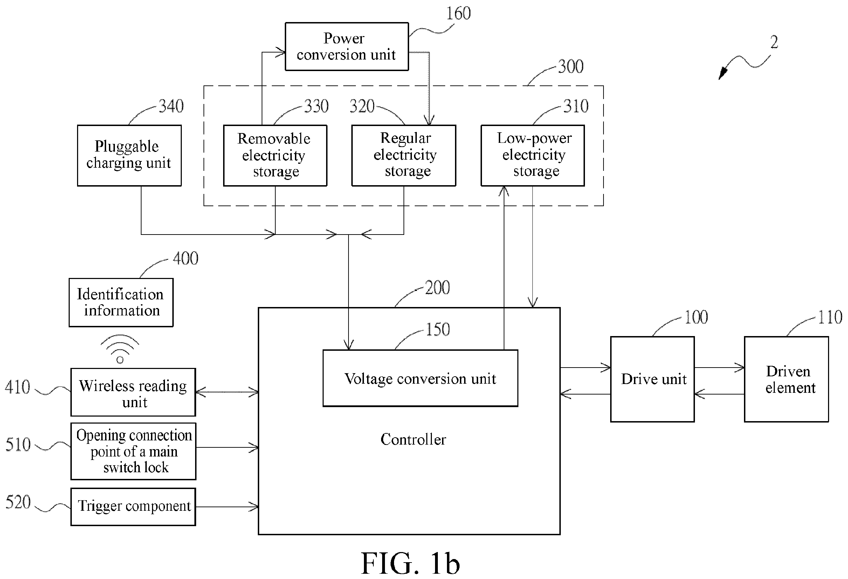

Referring to FIG. 1b, an electricity supply system 2 of a driven element of an electric vehicle includes: a drive unit 100, where the drive unit 100 drives a driven element 110 to move; a controller 200, used to control the drive unit 100; a low-power electricity storage 310, used to supply electricity required by the drive unit 100; and a regular electricity storage 320, where the regular electricity storage 320 is used to supply electricity required by the drive unit 100. In the low-power electricity storage 310, the controller 200 receives identification information 400 (for example, a sequence number of the vehicle) by using a wireless reading unit 410 (for example, near field communication), and allows, based on the identification information 400, the low-power electricity storage 310 to supply electricity required by the drive unit 100, to drive the driven element 110 to move. The electric vehicle includes at least vehicles driven by motor power, for example, an electric motor car, an electric bicycle, an electric car, an electric scooter, an electric ATV, an electric multi-purpose vehicle, and the like. In addition to being implemented on the electric vehicle, the present invention may alternatively be implemented on a non-electric vehicle.

Referring to FIG. 1b, FIG. 3, FIG. 4a, and FIG. 4b, the drive unit 100 drives the driven element 110 to move at an accommodating position or an opening position; and the driven element 110 is an electricity storage box 600 in an electric vehicle 10, a cover body 610 of the electricity storage box, or a cushion 700 of the electric vehicle.

Referring to FIG. 1b, the electricity storage 300 is a battery; the drive unit 100 is a motor or an electromagnetic valve; the controller 200 is a driven element drive controller; the power conversion unit 160 is a direct current charger; and the voltage conversion unit 150 is a charging device.

Referring to FIG. 1b and FIG. 4b, the plurality of electricity storages 300 further includes at least one removable electricity storage 330; the driven element 110 is an electricity storage box 600; the drive unit 100 is a motor; and the controller 200 is a driven element drive controller, the electricity storage box 600 accommodates the removable electricity storage 330, and the driven element drive controller controls the motor to move, so that the electricity storage box 600 rotates from an accommodating position to an opening position.

Referring to FIG. 1b and FIG. 4c, the plurality of electricity storages 300 further includes at least one removable electricity storage 330; the driven element 110 is a cover body 610 of an electricity storage box; the drive unit 100 is a motor; and the controller 200 is a driven element drive controller, the electricity storage box 600 accommodates the removable electricity storage 330, and the driven element drive controller controls the motor to move, so that the cover body 610 of the electricity storage box rotates from an accommodating position to an opening position.

Referring to FIG. 1b and FIG. 4c, the plurality of electricity storages 300 further includes at least one removable electricity storage 330; the driven element 110 is a cover body 610 of an electricity storage box; the drive unit 100 is an electromagnetic valve; and the controller 200 is a driven element drive controller, the electricity storage box 600 accommodates the removable electricity storage 330, and the driven element drive controller controls the electromagnetic valve to move to drive a lockset (not shown in the figures), to unlock the cover body 610 of the electricity storage box.

Referring to FIG. 1b and FIG. 3, the plurality of electricity storages 300 further includes at least one removable electricity storage 330; the driven element 110 is a cushion 700 of a vehicle; the drive unit 100 is a motor; and the controller 200 is a driven element drive controller, the removable electricity storage 330 is accommodated on a lower side of the cushion 700 of the vehicle, and the driven element drive controller controls the motor to move, so that the cushion 700 of the vehicle rotates from an accommodating position to an opening position.

Referring to FIG. 1b and FIG. 3, the plurality of electricity storages 300 further includes at least one removable electricity storage 330; the driven element 110 is a cushion 700 of a vehicle; the drive unit 100 is an electromagnetic valve; and the controller 200 is a driven element drive controller, the removable electricity storage 330 is accommodated on a lower side of the cushion 700 of the vehicle, and the driven element drive controller controls the electromagnetic valve to move to drive a lock, to unlock the cushion 700 of the vehicle.

In can be learned from the foregoing description that, the electricity supply system disclosed in the present invention can effectively supply electricity by means of providing of multiple electricity sources and with reference to the pluggable charging unit, to prevent the driven element from being deadlocked, and avoid the problem that an external tool is needed for removing.

In conclusion, the foregoing description merely records the implementations or embodiments of the technical means used to resolve the problem of the present invention, but is not used to limit the scope of the patent implementations of the present invention. That is, any equivalent variation and modification conforming to the patent claims of the present invention or made according to the patent scope of the present invention shall fall within the patent scope of the present invention.

### Description of symbols

1 Electricity supply system of a driven element of an electric vehicle
2 Electricity supply system of a driven element of an electric vehicle
10 Electric vehicle
100 Drive unit
110 Driven element
150 Voltage conversion unit
160 Power conversion unit
200 Controller
300 Power storage
310 Low-power electricity storage
320 Regular electricity storage
330 Removable electricity storage
340 Pluggable charging unit
400 Identification information
410 Wireless reading unit
500 Main switch lock
510 Opening connection point
512 Key off state
514 Key on state
520 Trigger component
600 Electricity storage box
610 Cover body of an electricity storage box
700 Cushion of a vehicle
800 Foot pedal

## Claims

1. An electricity supply system of a driven element of a vehicle, wherein the driven element is applicable to an electricity storage of the vehicle, and the electricity supply system of a driven element of a vehicle comprises:
a drive unit, wherein the drive unit drives the driven element to move;
a controller, used to control the drive unit; and
a plurality of electricity storages, wherein at least one of the plurality of electricity storages supplies electricity to the drive unit, to drive the driven element to move.

2. The electricity supply system of a driven element of a vehicle according to claim 1, wherein the drive unit drives the driven element to move at an accommodating position or an opening position.

3. The electricity supply system of a driven element of a vehicle according to claim 1, wherein the plurality of electricity storages comprises at least one low-power electricity storage, the controller receives identification information by using a wireless reading unit, and allows, based on the identification information, the low-power electricity storage to supply electricity required by the drive unit, and the wireless reading unit is near field communication.

4. The electricity supply system of a driven element of a vehicle according to claim 1, wherein the plurality of electricity storages further comprises at least one regular electricity storage and one low-power electricity storage, and the controller determines a trigger signal of a main switch lock, and operates a trigger component of the vehicle based on the trigger signal, to allow the regular electricity storage to supply electricity required by the drive unit.

5. The electricity supply system of a driven element of a vehicle according to claim 1, wherein the plurality of electricity storages further comprises at least one regular electricity storage and one low-power electricity storage, and the controller determines a trigger signal of a main switch lock, and operates a trigger component of the vehicle based on the trigger signal, to allow the low-power electricity storage to supply electricity required by the drive unit.

6. The electricity supply system of a driven element of a vehicle according to claim 1, wherein the plurality of electricity storages further comprises at least one regular electricity storage and one low-power electricity storage, and the controller determines that a main switch lock is in a key on state, and operates a trigger component of the vehicle to allow the low-power electricity storage to supply electricity required by the drive unit.

7. The electricity supply system of a driven element of a vehicle according to claim 1, wherein the plurality of electricity storages further comprises at least one regular electricity storage and one low-power electricity storage, and the controller determines that a main switch lock is operated to an opening connection point to allow the regular electricity storage to supply electricity required by the drive unit.

8. The electricity supply system of a driven element of a vehicle according to claim 1, wherein the plurality of electricity storages further comprises at least one regular electricity storage and one low-power electricity storage, and the controller determines that a main switch lock is operated to an opening connection point to allow the low-power electricity storage to supply electricity required by the drive unit.

9. The electricity supply system of a driven element of a vehicle according to any one of claims 4 to 8, further comprising a voltage conversion unit, wherein the regular electricity storage supplies electricity to the drive unit by using the voltage conversion unit, the regular electricity storage charges the low-power electricity storage by using the voltage conversion unit; the plurality of electricity storages further comprises at least one removable electricity storage, and the removable electricity storage charges the regular electricity storage by using a power conversion unit.

10. The electricity supply system of a driven element of a vehicle according to any one of according to claims 4 to 8, wherein the plurality of electricity storages further comprises at least one removable electricity storage, and the removable electricity storage or the regular electricity storage charges the low-power electricity storage by using a voltage conversion unit.

11. The electricity supply system of a driven element of a vehicle according to any one of claims 4 to 8, further comprising at least one removable electricity storage and one pluggable charging unit, wherein the pluggable charging unit charges the removable electricity storage, the regular electricity storage, and the low-power electricity storage.

12. An electricity supply system of a driven element of a vehicle, wherein the driven element is applicable to an electricity storage of the vehicle, and the electricity supply system of a driven element of a vehicle comprises:
a drive unit, wherein the drive unit drives a driven element to move;
a controller, used to control the drive unit;
a low-power electricity storage, used to supply electricity required by the drive unit; and
a regular electricity storage, wherein the regular electricity storage is used to supply electricity required by the drive unit, in the low-power electricity storage, the controller receives identification information by using a wireless reading unit, and allows, based on the identification information, the low-power electricity storage to supply electricity required by the drive unit, to drive the driven element to move.

13. The electricity supply system of a driven element of a vehicle according to claim 1 or 12, wherein the plurality of electricity storages further comprises at least one removable electricity storage; the driven element is an electricity storage box; the drive unit is a motor; and the controller is a driven element drive controller, the electricity storage box accommodates the removable electricity storage, and the driven element drive controller controls the motor to move, so that the electricity storage box rotates from an accommodating position to an opening position.

14. The electricity supply system of a driven element of a vehicle according to claim 1 or 12, wherein the plurality of electricity storages further comprises at least one removable electricity storage; the driven element is a cover body of an electricity storage box; the drive unit is a motor; and the controller is a driven element drive controller, the electricity storage box accommodates the removable electricity storage, and the driven element drive controller controls the motor to move, so that the cover body of the electricity storage box rotates from an accommodating position to an opening position.

15. The electricity supply system of a driven element of a vehicle according to claim 1 or 12, wherein the plurality of electricity storages further comprises at least one removable electricity storage; the driven element is a cover body of an electricity storage box; the drive unit is an electromagnetic valve; and the controller is a driven element drive controller, the electricity storage box accommodates the removable electricity storage, and the driven element drive controller controls the electromagnetic valve to move to drive a lockset, to unlock the cover body of the electricity storage box.

16. The electricity supply system of a driven element of a vehicle according to claim 1 or 12, wherein the plurality of electricity storages further comprises at least one removable electricity storage; the driven element is a cushion of the vehicle; the drive unit is a motor; and the controller is a driven element drive controller, the removable electricity storage is accommodated on a lower side of the cushion of the vehicle, and the driven element drive controller controls the motor to move, so that the cushion of the vehicle rotates from an accommodating position to an opening position.

17. The electricity supply system of a driven element of a vehicle according to claim 1 or 12, wherein the plurality of electricity storages further comprises at least one removable electricity storage; the driven element is a cushion of the vehicle; the drive unit is an electromagnetic valve; and the controller is a driven element drive controller, the removable electricity storage is accommodated on a lower side of the cushion of the vehicle, and the driven element drive controller controls the electromagnetic valve to move to drive a lockset, to unlock the cushion of the vehicle.
